# EUROPEAN PATENT APPLICATION

(11) **EP 4 818 229 A1**
(43) Date of publication of application: **07.10.2026**
(21) Application number: 24897382.8
(22) Date of filing: 19.11.2024
(51) Int. Cl.: C08G 65/40, C08J 5/04, C08K 7/06, C08L 71/10

(54) **POLYETHER NITRILE AND POLYETHER NITRILE-CONTAINING CARBON FIBER COMPOSITE MATERIAL**

(30) Priority: 28.11.2023 JP 2023200637
(71) Applicant: Toray Industries, Inc., Tokyo 103-8666 (JP)
(72) Inventor: AKAHIRA, Masato, Nagoya-shi, Aichi 455-8502 (JP); HIRANO, Taisuke, Nagoya-shi, Aichi 455-8502 (JP)
(74) Representative: Mewburn Ellis LLP
(86) International application number: PCT/JP2024/040942
(87) International publication number: WO 2025/115696

(57) **Abstract**

A polyether nitrile-containing carbon fiber composite material comprising: a polyether nitrile having N repeating units represented by formula (I) and M repeating units represented by formula (II), wherein N and M are integers satisfying a relationship of 0 < [N/(N + M)] ≤ 1.00, and having a rate of weight loss of 5% or less when held in air at (melting point + 30°C) for 30 minutes in thermogravimetric (TG) analysis; and carbon fibers.

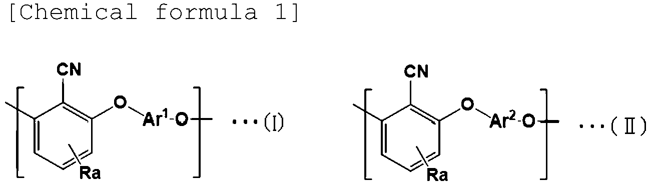

## Description

### TECHNICAL FIELD

The present invention relates to polyether nitriles and polyether nitrile-containing carbon fiber composite materials.

### BACKGROUND ART

Polyether nitriles are a class of super engineering plastics with advanced properties that have excellent thermal stability, chemical resistance and flame retardancy, as well as excellent mechanical properties such as wear resistance and abrasion resistance. Polyether nitrile can be used as a composite material with carbon fiber in order to exhibit higher mechanical properties. Patent Document 1 discloses a polyether nitrile-containing carbon fiber composite material.

### PRIOR ART DOCUMENT

### PATENT DOCUMENT

Patent Document 1: Japanese Patent Laid-open Publication No. 4-57973

### SUMMARY OF THE INVENTION

### PROBLEMS TO BE SOLVED BY THE INVENTION

In a carbon fiber composite material, higher thermal stability is required due to recent advancement of required characteristics for materials.

However, the polyether nitrile-containing carbon fiber composite material described in Patent Document 1 has insufficient thermal stability. Therefore, in view of these problems of the prior art, an object of the present invention is to provide a polyether nitrile having excellent thermal stability. Another object of the present invention is to provide a polyether nitrile-containing carbon fiber composite material suitable for mobility vehicle components, structural material components, and other components for industrial use.

### SOLUTIONS TO THE PROBLEMS

The inventors of the present invention conducted intensive studies in order to solve the above problems, and found that a molded article excellent in thermal stability, mechanical properties, and chemical resistance can be obtained by using a polyether nitrile-containing carbon fiber composite material using a polyether nitrile satisfying specific conditions, thereby completing the present invention. That is, the present invention has the following constitutions.
(1) A polyether nitrile having N repeating units represented by formula (I) and M repeating units represented by formula (II), wherein N and M are integers satisfying a relationship of 0 < [N/(N + M)] ≤ 1.00, and having a rate of weight loss of 5% or less when held in air at (melting point + 30°C) for 30 minutes in thermogravimetric (TG) analysis: 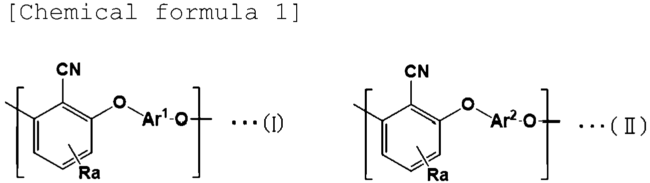 wherein Ar¹ and Ar² have different skeletons each selected from one kind of units represented by the following formulas (a) to (f); R is any organic group selected from a linear organic group having 1 to 6 carbon atoms, a branched organic group having 3 to 6 carbon atoms, and a cyclic organic group having 3 to 6 carbon atoms; R may contain one or more atoms selected from an oxygen atom, a nitrogen atom, and a sulfur atom; a represents the number of substituent R; a in formulas (a), (b), (c), (e), and (f) is any integer of 0 to 4, and a in formulas (I), (II), and (d) is any integer of 0 to 3; and when a plurality of groups R are present, the Rs may be the same as or different from each other; 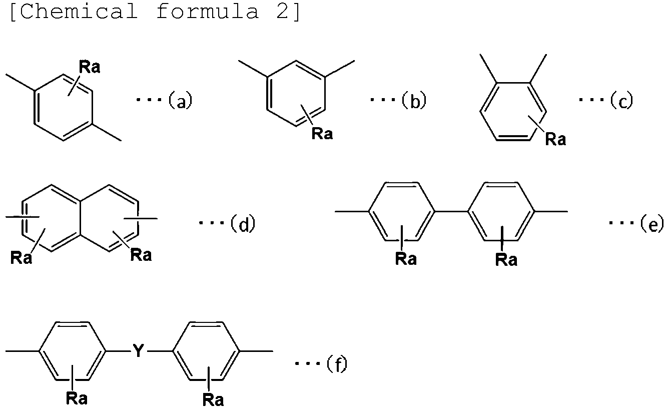 Y in the formula (f) is a group selected from the following units; X is any of a hydrogen atom, a methyl group, and a trifluoromethyl group. 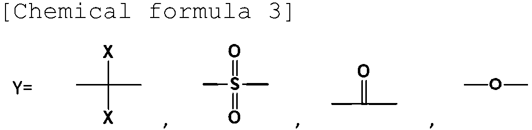
(2) A polyether nitrile-containing carbon fiber composite material comprising the polyether nitrile according to (1) and carbon fibers, wherein a rate of weight loss is 5% or less when the polyether nitrile-containing carbon fiber composite material is held in air at (melting point of the polyether nitrile + 30°C) for 30 minutes in thermogravimetric (TG) analysis, and a content of the polyether nitrile is 20 to 85 wt%.
(3) The polyether nitrile-containing carbon fiber composite material according to (2), wherein Ar¹ is a skeleton represented by the formula (a) or the formula (e), and Ar² is one kind of skeleton selected from units represented by the formulas (a) to (f), and is a skeleton different from Ar¹.
(4) The polyether nitrile-containing carbon fiber composite material according to (2) or (3), wherein N and M are integers that satisfy a relationship of 0.80 ≤ [N/(N + M)] < 1.00.
(5) The polyether nitrile-containing carbon fiber composite material according to any one of (2) to (4), wherein the polyether nitrile has a melting point of 280 to 370°C.
(6) A mobility vehicle component comprising the polyether nitrile-containing carbon fiber composite material according to any one of (2) to (5).
(7) A structural material component comprising the polyether nitrile-containing carbon fiber composite material according to any one of (2) to (5).
(8) A mobility vehicle using the mobility vehicle component according to (6).
(9) A structural material using the structural material component according to (7).

### EFFECTS OF THE INVENTION

According to the present invention, a polyether nitrile and a polyether nitrile-containing carbon fiber composite material having excellent thermal stability can be provided.

### EMBODIMENTS OF THE INVENTION

Hereinafter, the present invention will be described in detail with reference to an embodiment.

A polyether nitrile-containing carbon fiber composite material of the present invention includes a polyether nitrile and carbon fibers, wherein the polyether nitrile has N repeating units represented by formula (I) and M repeating units represented by formula (II), N and M are integers satisfying a relationship of 0 < [N/(N + M)] ≤ 1.00, a rate of weight loss based on the weight of the polyether nitrile contained in the polyether nitrile-containing carbon fiber composite material is 5% or less when held in air at (melting point + 30°C) for 30 minutes in thermogravimetric (TG) analysis, and a content of the polyether nitrile is 20 to 85 wt%.

In the formula, Ar¹ and Ar² have different skeletons each selected from one kind of units represented by the formulas (a) to (f).

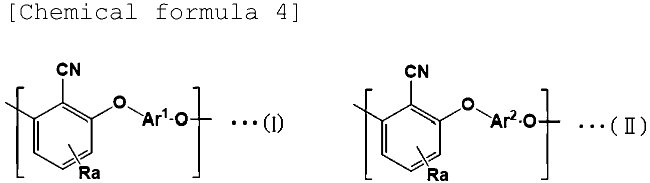

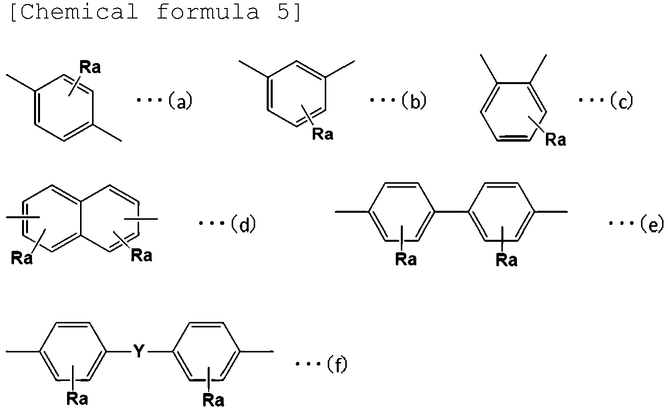

Y in the formula (f) is a group selected from the following units. X is any of a hydrogen atom, a methyl group, and a trifluoromethyl group.

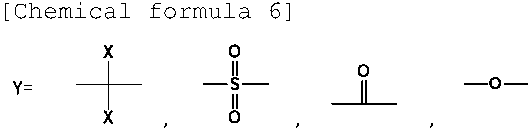

### (1) Polyether Nitrile

The polyether nitrile of the present invention is a polyether nitrile having N repeating units represented by the formula (I) and M repeating units represented by the formula (II) in one molecule. Here, N and M are integers that satisfy a relationship of 0 < [N/(N + M)] ≤ 1.00.

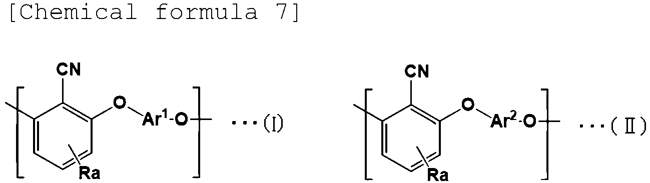

In the formula, Ar¹ and Ar² have different skeletons each selected from one kind of units represented by the following formulas (a) to (f). R is any organic group selected from a linear organic group having 1 to 6 carbon atoms, a branched organic group having 3 to 6 carbon atoms, and a cyclic organic group having 3 to 6 carbon atoms. R may contain one or more atoms selected from an oxygen atom, a nitrogen atom, and a sulfur atom. a represents the number of substituent R. a in formulas (a), (b), (c), (e), and (f) is any integer of 0 to 4, and a in formulas (I), (II), and (d) is any integer of 0 to 3. A skeleton in which a is 0 is preferable from the viewpoint of industrial applicability. Further, in the case of a plurality of groups R, the groups R may be equal to or different from each other.

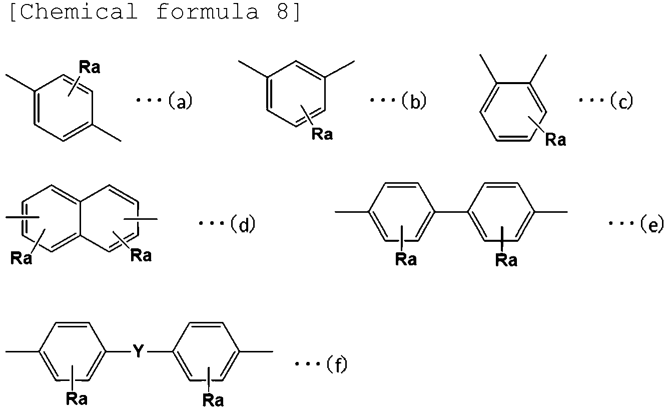

Y in the formula (f) is a group selected from the following units. X is any of a hydrogen atom, a methyl group, and a trifluoromethyl group.

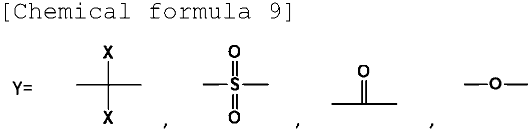

The content rate (molar ratio) of the repeating unit represented by Ar¹ in the polyether nitrile is represented by [N/(N + M)]. The content rate (molar ratio) of the repeating unit represented by Ar² is represented by [M/(N + M)]. Note that the relationship between N and M is N ≥ M.

From the viewpoint of easily obtaining polyether nitrile having a lowered melting point, [N/(N + M)] < 1.00 is preferable. Since [N/(N + M)] has a lower melting point as it goes away from 1.00, [N/(N + M)] is more preferably 0.99 or less, still more preferably 0.97 or less. By lowering the melting point of the polyether nitrile, a polyether nitrile having excellent processability can be easily obtained.

From the viewpoint of easily obtaining highly crystalline polyether nitrile, it is preferable that 0.60 ≤ [N/(N + M)]. [N/(N + M)] is more preferably 0.80 or more, still more preferably 0.90 or more. By making the polyether nitrile highly crystalline, a polyether nitrile excellent in solvent resistance can be obtained.

N and M are preferably integers that satisfy a relationship of 0.60 ≤ [N/(N + M)] < 1.00, more preferably integers that satisfy a relationship of 0.80 ≤ [N/(N + M)] < 1.00, further preferably integers that satisfy a relationship of 0.80 ≤ [N/(N + M)] ≤ 0.99, and particularly preferably integers that satisfy a relationship of 0.90 ≤ [N/(N + M)] ≤ 0.97.

The range of the sum of N and M is not particularly limited, but a range of 5 to 10,000 can be exemplified, and a range of 5 to 5000 is preferable, a range of 5 to 1000 is more preferable, and a range of 5 to 500 is more preferable.

The polyether nitrile of the present invention may contain a third repeating unit in addition to the repeating unit represented by the formula (I) and the repeating unit represented by the formula (II). In that case, the total molar ratio of the repeating unit represented by the formula (I) and the repeating unit represented by the formula (II) in all the repeating units in the polyether nitrile is preferably 60 mol% or more and 100 mol% or less, more preferably 80 mol% or more and 100 mol% or less, and most preferably 90 mol% or more and 100 mol% or less.

In the polyether nitrile of the present invention, it is preferable that Ar¹ is a skeleton represented by the formula (a) or the formula (e), and Ar² is one kind of skeleton selected from units represented by the formulas (a) to (f), and is a skeleton different from Ar¹. In the polyether nitrile of the present invention, it is more preferable that Ar¹ is a skeleton represented by the formula (a), and Ar² is one kind of skeleton selected from units represented by the formulas (b) to (f). Since Ar¹ is a skeleton represented by the formula (a) or the formula (e), more preferably a skeleton represented by the formula (a), the thermal stability of the resulting polyether nitrile is more easily improved.

In the polyether nitrile of the present invention, it is more preferable that the repeating unit represented by the formula (I) is a structural unit represented by the following formula (III), and the structural unit represented by the formula (II) is a structural unit represented by the following formula (IV).

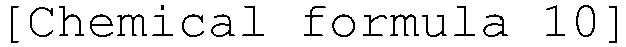

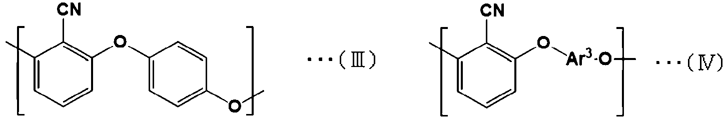

In the formula, Ar³ has one kind of skeleton selected from units represented by any one of formulas (g) to (k). When the repeating unit represented by the formula (I) is a structural unit represented by the following formula (III), the resulting polyether nitrile has excellent thermal stability, which is preferable.

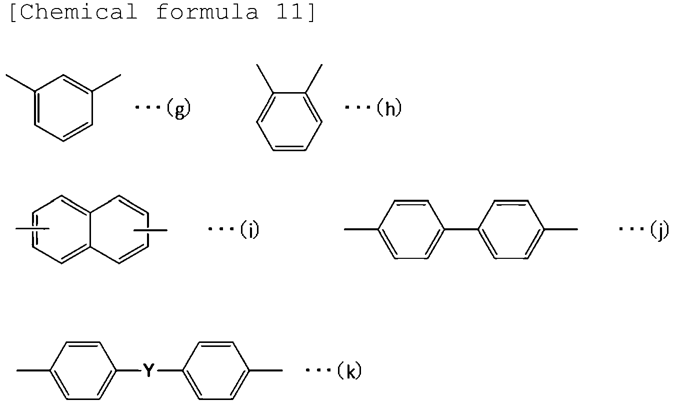

Y in the formula (k) is a group selected from the following units. X is any of a hydrogen atom, a methyl group, and a trifluoromethyl group.

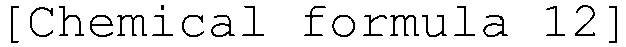

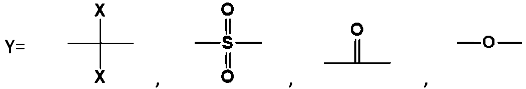

The polyether nitrile of the present invention preferably has a melting point of 280 to 370°C. By setting the melting point of the polyether nitrile to 280°C or higher, a polyether nitrile-containing carbon fiber composite material excellent in thermal stability can be obtained. When the melting point of the polyether nitrile is 370°C or lower, the processability of the polyether nitrile is excellent.

### (2) Method for Producing Polyether Nitrile

The method for producing a polyether nitrile is not particularly limited as long as it can synthesize a polyether nitrile satisfying the requirement (1), and any production method can be adopted. For example, polyether nitrile can be produced by heating a mixture of an aromatic compound having two hydroxyl groups, an aromatic compound having a benzonitrile skeleton having two halogeno groups, and a base in an organic polar solvent. When polyether nitrile is produced, one kind or two or more kinds of aromatic compounds having two hydroxyl groups may be used.

Hereinafter, an aromatic compound having two hydroxyl groups, an aromatic compound having a benzonitrile skeleton having two halogeno groups, a base, an organic polar solvent, and reaction conditions used in an example of a method for producing polyether nitrile will be described.

Examples of the aromatic compound having two hydroxyl groups in the method for producing polyether nitrile include compounds represented by the following general formulas (1) to (s).

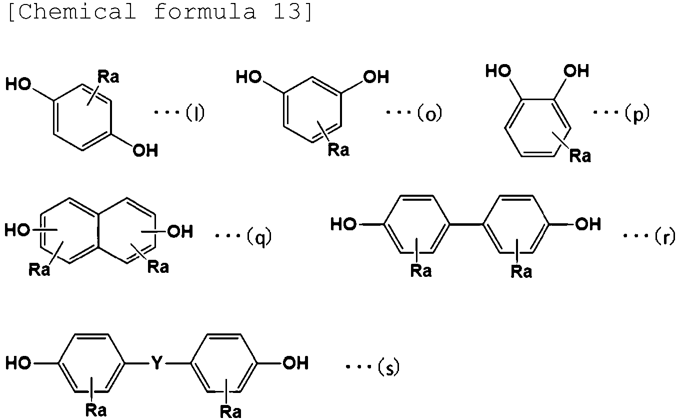

In the formula, R is any organic group selected from a linear organic group having 1 to 6 carbon atoms, a branched organic group having 3 to 6 carbon atoms, and a cyclic organic group having 3 to 6 carbon atoms. R may contain one or more atoms selected from an oxygen atom, a nitrogen atom, and a sulfur atom. a in the formulas (l) to (s) represents the number of substituent R. a in the formulas (l), (o), (p), (r), and (s) is an integer of 0 to 4, and a in the formula (q) is an integer of 0 to 3. Further, in the case of a plurality of groups R, the groups R may be equal to or different from each other.

Y in the formula (s) is a group selected from the following units. X is any of a hydrogen atom, a methyl group, and a trifluoromethyl group.

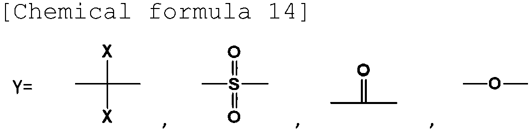

Specific examples of the aromatic compound having two hydroxyl groups include hydroquinone, methylhydroquinone, methoxyhydroquinone, 2,6-dimethylhydroquinone, 2,3-dimethylhydroquinone, trimethylhydroquinone, tetramethylhydroquinone, 2,5-di-tert-butylhydroquinone, 2,5-di-tert-amylhydroquinone, 2-acetylhydroquinone, resorcinol, 5-methoxyresorcinol, 2-methylresorcinol, 5-methylresorcinol, 2,4-dihydroxybenzaldehyde, 4-ethylresorcinol, 3,5-dihydroxyacetophenone, 4-butylresorcinol, 2-acetylresorcinol, 4-hexylresorcinol, 4-acetylresorcinol, 3,5-dihydroxybenzoic acid, 4-benzoylresorcinol, 4,6-diacetylresorcinol, 2,6-dihydroxybenzoic acid, 2,4-dihydroxybenzoic acid, 4-propionylresorcinol, 3,5-dihydroxybenzamide, 3,5-dihydroxy-4-methylbenzoic acid, 2-nitroresorcinol, 2,6-dihydroxy-4-methylbenzoic acid, 2,4-dihydroxybenzamide, 1,4-dihydroxynaphthalene, catechol, 4,4'-dihydroxybiphenyl, 2,5-dihydroxybenzoic acid, phenylhydroquinone, 2,5-dihydroxyterephthalic acid, 1,4-dihydroxy-2-naphthoic acid, 3,6-dihydroxybenzonorbornane, 2,3-dihydroxynaphthalene, 1,2-dihydroxynaphthalene, 4-methylcatechol, 3-methoxycatechol, 3-methylcatechol, 3,4-dihydroxybenzaldehyde, 4-tert-butylcatechol, 2,3-dihydroxybenzaldehyde, 3,4-dihydroxyacetophenone, 3,4-dihydroxybenzophenone, 3,5-di-tert-butylcatechol, 3,4-dihydroxybenzoic acid, 4-nitrocatechol, 2,3-dihydroxybenzoic acid, catechol-4-acetic acid, 4,4'-dihydroxy-3,3',5,5'-tetramethylbiphenyl, 3,3'-dihydroxybenzidine, 1,5-dihydroxynaphthalene, 1,6-dihydroxynaphthalene, 2,6-dihydroxynaphthalene, 2,7-dihydroxynaphthalene, 2,2'-bis(4-hydroxyphenyl)propane, bis(4-hydroxyphenyl)sulfone, 1,1'-bis(4-hydroxyphenyl)methane, 4,4'-dihydroxybenzophenone, 4,4'-dihydroxydiphenyl ether, and 2,2-bis(4-hydroxyphenyl)hexafluoropropane. Among them, hydroquinone, resorcinol, or 4,4'-dihydroxybiphenyl is preferable, and hydroquinone is more preferable because the thermal stability of the resulting polyether nitrile-containing carbon fiber composite material is more easily improved. When two aromatic compounds having two hydroxyl groups are used, it is preferable that one of the two aromatic compounds is hydroquinone, and the blending amount of hydroquinone is larger than the blending amount of the other aromatic compound.

As the compound having a benzonitrile skeleton having two halogeno groups in the method for producing polyether nitrile, a compound represented by the following formula (t) can be preferably applied.

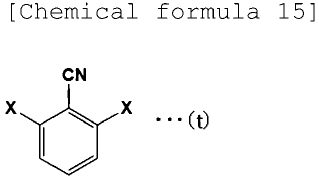

X is a chlorine atom or a fluorine atom. Examples of the compound having a benzonitrile skeleton having two halogeno groups include 2,6-dichlorobenzonitrile, 2,6-difluorobenzonitrile, and 2-chloro-6-fluorobenzonitrile. Among them, 2,6-dichlorobenzonitrile is preferable.

In the method for producing polyether nitrile, the blending amount of the compound having a benzonitrile skeleton having 2 halogeno groups is not particularly limited as long as it is in the range of 0.90 to 1.10 mol with respect to 1.00 mol of the aromatic compound having 2 hydroxyl groups, but is preferably in the range of 1.01 to 1.05 mol from the viewpoint of the physical properties of the resulting polymer. When the blending amount of the compound having a benzonitrile skeleton having two halogeno groups is 1.01 mol or more with respect to 1.00 mol of the aromatic compound having two hydroxyl groups, polyether nitrile excellent in heat resistance is obtained. When the blending amount of the compound having a benzonitrile skeleton having two halogeno groups is 1.05 mol or less with respect to 1.00 mol of the aromatic compound having two hydroxyl groups, the resulting polyether nitrile can have a high molecular weight.

Examples of the base in the method for producing a polyether nitrile include an organic base and an inorganic base. The type of the base is not limited, but from the viewpoint of ease of handling and reactivity, carbonates such as sodium carbonate and potassium carbonate; bicarbonates such as sodium hydrogen carbonate and potassium hydrogen carbonate are preferred, and sodium carbonate or potassium carbonate is further preferred.

The organic polar solvent used in the method for producing polyether nitrile is not particularly limited as long as the reaction is not inhibited, but N-methyl-2-pyrrolidone (NMP), dimethyl sulfoxide (DMSO), or sulfolane is preferable, and NMP is particularly preferable.

In the method for producing polyether nitrile, water is produced as a by-product as the reaction proceeds. For the purpose of removing the by-product water, an organic compound that forms an azeotropic mixture with water can be added as necessary. Such an organic compound is not particularly limited as long as the compound forms an azeotropic mixture with water, but a nonpolar organic solvent with a boiling point lower than that of the reaction solvent is preferable, and specific examples thereof include toluene.

The method for producing the polyether nitrile is usually carried out under heating under a nitrogen atmosphere or under reduced pressure. The reaction temperature is preferably in the range of 150 to 200°C, and the reaction is preferably carried out while gradually increasing the temperature. By increasing the temperature stepwise, volatilization of a compound having a benzonitrile skeleton having two halogeno groups during polymerization is suppressed, and a polyether nitrile excellent in thermal stability under air can be obtained.

The reaction time in the method for producing polyether nitriles can vary to some extent depending on the reaction temperature, the nature of the reagents used and the presence of the solvent, but is preferably 6 to 10 hours.

The produced polyether nitrile can be obtained by separating and recovering the polyether nitrile from the reaction mixture obtained by the above-described method. The method for recovering the polyether nitrile from the reaction mixture is not particularly limited, and examples thereof include a method for recovering the polyether nitrile by bringing a solvent having solubility in a by-product salt into contact with the reaction mixture as necessary under heating as necessary, and a method for removing the by-product salt and the oligomer from the reaction mixture under reduced pressure.

In the method for producing a copolymerized polyether nitrile of the present invention, an end-capping agent may be used. The end-capping agent is an aromatic compound having one hydroxyl group. Specific examples thereof include 4-phenylphenol, 2-phenylphenol, 3-phenylphenol, 4-phenoxyphenol, 1-naphthol, and 2-naphthol. A compound selected from 4-phenylphenol, 4-phenoxyphenol, 1-naphthol, and 2-naphthol is preferable, and a compound selected from 4-phenylphenol, 4-phenoxyphenol, 1-naphthol, and 2-naphthol is more preferable. By blending an aromatic compound having one hydroxyl group as an end-capping agent, a polyether nitrile and a polyether nitrile-containing carbon fiber composite material excellent in heat resistance can be obtained.

The blending amount (mol) of the aromatic compound having one hydroxyl group is not particularly limited as long as it is in the range of 0.01 to 5.00 mol% with respect to the total amount (mol) of the aromatic compound having two hydroxyl groups and the aromatic compound having two halogeno groups and having a benzonitrile skeleton, but from the viewpoint of the physical properties of the resulting polymer, the blending amount is more preferably in the range of 0.10 to 2.00 mol%.

### (3) Polyether nitrile-containing carbon fiber composite material

The polyether nitrile-containing carbon fiber composite material of the present invention includes the polyether nitrile of the present invention and a carbon fiber.

That is, the polyether nitrile-containing carbon fiber composite material of the present invention includes a polyether nitrile and carbon fibers, wherein the polyether nitrile has N repeating units represented by formula (I) and M repeating units represented by formula (II), N and M are integers satisfying a relationship of 0 < [N/(N + M)] ≤ 1.00, a rate of weight loss based on the weight of the polyether nitrile contained in the polyether nitrile-containing carbon fiber composite material is 5% or less when held in air at (melting point + 30°C) for 30 minutes in thermogravimetric (TG) analysis, and a content of the polyether nitrile is 20 to 85 wt%.

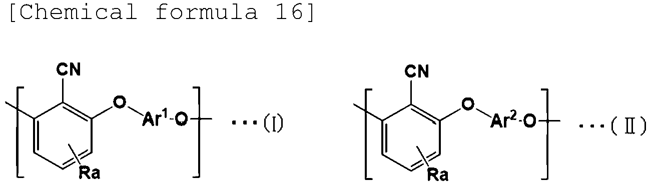

In the formula, Ar¹ and Ar² have different skeletons each selected from one kind of units represented by the following formulas (a) to (f). R is any organic group selected from a linear organic group having 1 to 6 carbon atoms, a branched organic group having 3 to 6 carbon atoms, and a cyclic organic group having 3 to 6 carbon atoms. R may contain one or more atoms selected from an oxygen atom, a nitrogen atom, and a sulfur atom. a represents the number of substituent R. a in formulas (a), (b), (c), (e), and (f) is any integer of 0 to 4, and a in formulas (I), (II), and (d) is any integer of 0 to 3. Further, in the case of a plurality of groups R, the groups R may be equal to or different from each other.

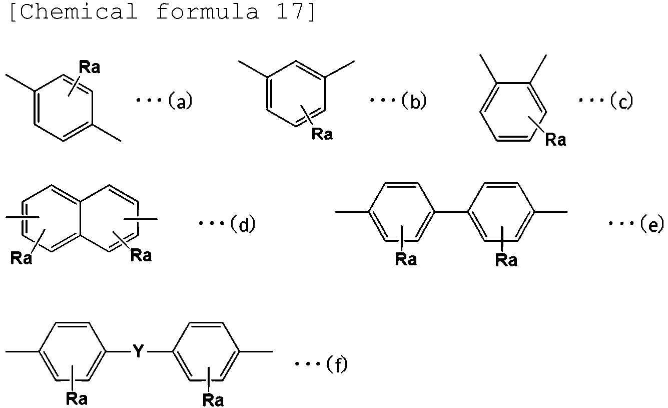

Y in the formula (f) is a group selected from the following units. X is any of a hydrogen atom, a methyl group, and a trifluoromethyl group.

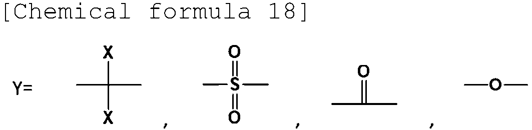

The carbon fibers may be either continuous carbon fibers or discontinuous carbon fibers. In order to obtain a polyether nitrile-containing carbon fiber composite material excellent in mechanical properties, the carbon fiber is preferably a continuous carbon fiber, and more preferably a carbon fiber bundle. The carbon fiber bundle refers to a bundle of a plurality of continuous carbon fibers.

The polyether nitrile-containing carbon fiber composite material of the present invention may contain a polymer other than polyether nitrile, various additives, and the like as necessary. As the additive, a plasticizer, a crystal nucleating agent, a metal soap, a release agent, a coloring inhibitor, a lubricant, an ultraviolet inhibitor, an antioxidant, a flame retardant, a colorant, a foaming agent, and the like can be blended.

The polyether nitrile-containing carbon fiber composite material of the present invention can be produced by impregnating carbon fiber with polyether nitrile.

Examples of the method for impregnating the continuous carbon fiber with the polyether nitrile include a film impregnation method in which the carbon fiber bundle is impregnated with the polyether nitrile by melting and pressurizing a film-like polyether nitrile, a commingling impregnation method in which the carbon fiber bundle is impregnated with the polyether nitrile by melting the polyether nitrile after commingling the continuous fibrous polyether nitrile and the carbon fiber bundle, a powder impregnation method in which the carbon fiber bundle is impregnated with the polyether nitrile by melting the polyether nitrile after dispersing the powdery polyether nitrile in gaps between fibers in the continuous carbon fiber bundle, and a pultrusion impregnation method in which the carbon fiber bundle is impregnated with the polyether nitrile by immersing the continuous carbon fiber bundle in the molten polyether nitrile, and any method may be used. The pultrusion impregnation method is particularly preferred.

Examples of the method for impregnating a carbon fiber substrate composed of discontinuous carbon fiber with the polyether nitrile include: a method in which the polyether nitrile is supplied by an extruder to impregnate the carbon fiber substrate; a method in which powdery polyether nitrile is dispersed in a fiber layer of the carbon fiber substrate composed of discontinuous carbon fiber, followed by melting the polyether nitrile for impregnation; a method in which the polyether nitrile is formed into a film and laminated with the carbon fiber substrate composed of discontinuous carbon fiber, followed by melting the polyether nitrile for impregnation; a method in which the polyether nitrile is dissolved in a solvent to impregnate the carbon fiber substrate composed of discontinuous carbon fiber with the polyether nitrile in a solution state, followed by volatilizing the solvent; and a method in which the polyether nitrile is formed into fibers to form a mixed yarn with discontinuous carbon fiber. Any method may be used. Examples of the carbon fiber substrate include a unidirectional fabric in which fiber directions are aligned in substantially the same direction and integrated with auxiliary weft yarns, a binder, or the like; a bidirectional fabric in which carbon fiber is interlaced in two directions; a multiaxial fabric in which carbon fiber is interlaced in multiple directions; a multiaxial stitched fabric in which a sheet in which carbon fiber is aligned in one direction is laminated in multiple directions and integrated with a stitch yarn; a braid; and a nonwoven fabric or a mat using discontinuous fiber, and the like.

The content of polyether nitrile in the polyether nitrile-containing carbon fiber composite material of the present invention is 20 to 85 wt%. By setting the content of the polyether nitrile to 20 wt% or more, the strength of a molded article obtained using the polyether nitrile-containing carbon fiber composite material can be improved. On the other hand, by setting the content of the polyether nitrile to 85 wt% or less, the strength of a molded article obtained using the polyether nitrile-containing carbon fiber composite material can be improved. The content is more preferably 30 wt% or more, still more preferably 40 wt% or more. The content is more preferably 70 wt% or less, still more preferably 60 wt% or less. Examples of the method of setting the content within the above range include a method of adjusting the input amounts of carbon fiber and polyether nitrile when a polyether nitrile-containing carbon fiber composite material is produced by the method as described above.

The content of polyether nitrile in the polyether nitrile-containing carbon fiber composite material of the present invention can be calculated by measuring the weight of the polyether nitrile-containing carbon fiber composite material, then immersing the composite in N-methyl-2-pyrrolidone (NMP) at 200°C to elute the polyether nitrile, and measuring the weight of carbon fiber remaining as a residue. When the polyether nitrile-containing carbon fiber composite material contains other kinds of polymers and various additives, the content of only polyether nitrile excluding other kinds of polymers and various additives is calculated, and taken as the content of polyether nitrile in the polyether nitrile-containing carbon fiber composite material.

One or more polyether nitrile-containing carbon fiber composite materials are laminated in an arbitrary configuration, and then molded while applying heat and/or pressure as necessary to obtain a molded article.

The polyether nitrile-containing carbon fiber composite material of the present invention has a rate of weight loss of 5% or less based on the weight of the polyether nitrile contained in the polyether nitrile-containing carbon fiber composite material when the polyether nitrile-containing carbon fiber composite material is held at a melting point +30°C for 30 minutes in air in thermogravimetric (TG) analysis. When the rate of weight loss is 5% or less, a polyether nitrile-containing carbon fiber composite material excellent in thermal stability can be obtained. The term "excellent in thermal stability" as used herein means that the rate of weight loss of polyether nitrile is small when the polyether nitrile is held at a melting point +30°C for 30 minutes under air, that is, thermal stability under air is excellent. More specifically, when a polyether nitrile-containing carbon fiber composite material is usually produced from polyether nitrile and a carbon fiber, the carbon fiber is impregnated at a temperature higher by 30°C than the melting point of the polyether nitrile. When the carbon fiber composite material is used for a component to be described later, the carbon fiber composite material may be melted and welded under air. Therefore, it is important to set the rate of weight loss to 5% or less at the melting point of polyether nitrile +30°C. The rate of weight loss is preferably 1% or less, and more preferably 0%.

The weight of the polyether nitrile contained in the polyether nitrile-containing carbon fiber composite material is determined, and based on the weight, the rate of weight loss is measured by the method described in <Thermogravimetric (TG) analysis of polyether nitrile-containing carbon fiber composite material> described later.

When the blending amount of the polyether nitrile and the carbon fiber is known, the weight of the polyether nitrile contained in the polyether nitrile-containing carbon fiber composite material can be determined by subtracting the weight of the carbon fiber from the polyether nitrile-containing carbon fiber composite material. When the blending amount of the polyether nitrile and the carbon fiber is unknown, the weight of the polyether nitrile-containing carbon fiber composite material is measured, then the polyether nitrile is removed from the polyether nitrile-containing carbon fiber composite material, and the weight is measured, whereby it can be determined from the difference in weight before and after the removal of the polyether nitrile. Examples of a method for removing the polyether nitrile from the polyether nitrile-containing carbon fiber composite material include a method in which the carbon fiber composite material is immersed in N-methyl-2-pyrrolidone (NMP) at 200°C to elute the polyether nitrile.

Examples of the method for setting the rate of weight loss based on the weight of the polyether nitrile contained in the polyether nitrile-containing carbon fiber composite material to 5% or less include a method of adjusting the monomer composition constituting the polyether nitrile. More specifically, for example, examples of the method of reducing the rate of weight loss include increasing the content of the skeleton represented by the formula (III) or the skeleton represented by the formula (a) in the constituent monomer composition.

The polyether nitrile-containing carbon fiber composite material of the present invention is excellent in mechanical properties. The inventors have found that polyether nitrile having excellent thermal stability (small rate of weight loss under air) tends to have high interfacial shear strength between polyether nitrile and carbon fiber. The polyether nitrile-containing carbon fiber composite material of the present invention is excellent in interfacial shear strength between polyether nitrile and carbon fiber, and therefore is particularly excellent in tensile strength of a molded article.

The polyether nitrile-containing carbon fiber composite material of the present invention is excellent in chemical resistance. The chemical resistance here indicates solvent resistance. The solvent resistance is evaluated by the method described in <Solvent resistance test of polyether nitrile-containing carbon fiber composite material> described later. The solvent resistance of the polyether nitrile-containing carbon fiber composite material of the present invention is preferably B or more, more preferably A or more in the evaluation of the solvent resistance test. Examples of the method for producing a polyether nitrile-containing carbon fiber composite material excellent in solvent resistance include a method of using polyether nitrile satisfying 0.60 ≤ [N/(N + M)] as described above.

The polyether nitrile-containing carbon fiber composite material of the present invention is excellent in thermal stability, mechanical properties, and chemical resistance, and thus can be used for mobility vehicle components, structural material components, and other components for industrial use.

Examples of the mobility vehicle component of the present invention include components for automobiles, aircraft, ships, motorcycles, drones, urban air mobility vehicle, and kick scooters. Examples of the structural material component of the present invention include components for buildings, bridges, railways, roads, and harbors. The polyether nitrile-containing carbon fiber composite material of the present invention is particularly suitable for a mobility vehicle component or a structural material component which is required to have characteristics excellent in thermal stability, mechanical properties, and chemical resistance.

Mobility vehicle using a mobility vehicle component containing the polyether nitrile-containing carbon fiber composite material of the present invention exhibits excellent properties. Examples of the mobility vehicle of the present invention include automobiles, aircraft, ships, motorcycles, drones, urban air mobility vehicle, and kick scooters.

The structural material using the structural material component using the polyether nitrile-containing carbon fiber composite material of the present invention exhibits excellent properties. Examples of the structural material of the present invention include buildings, bridges, railways, roads, and harbors.

### EXAMPLES

Hereinafter, the present invention will be specifically described with reference to examples. These examples are illustrative, but not restrictive.

### <Melting point of polyether nitrile and polyether nitrile containing carbon fiber composite material>

The melting point of the polyether nitrile was determined by measuring the polyether nitrile, and the melting point of the polyether nitrile containing carbon fiber composite material was determined by measuring the polyether nitrile containing carbon fiber composite material. Since carbon fibers are not melted in differential scanning calorimetry (DSC) analysis, the melting point indicated by the polyether nitrile-containing carbon fiber composite material is substantially the melting point of the contained polyether nitrile.

The melting point was determined by differential scanning calorimetry (DSC) analysis using Q20 manufactured by TA Instruments. The temperature was increased from 50°C to 400°C at a heating rate of 20°C/min, held at 400°C for 1 minute as it was, then lowered from 400°C to 50°C at a cooling rate of 20°C/min, increased again from 50°C to 400°C at a heating rate of 20°C/min, held at 400°C for 1 minute, and then lowered from 400°C to 100°C at a cooling rate of 20°C/min. The endothermic peak temperature observed at the second temperature increasing was taken as the melting point.

### <Thermogravimetric (TG) analysis of polyether nitrile>

The rate of weight loss when polyether nitrile was held at the melting point +30°C for 30 minutes was measured using TGA7 manufactured by PerkinElmer, Inc. The polyether nitrile was held at 50°C for 1 minute under an air stream, then heated to a melting point +30°C at a heating rate of 20°C/min, and held at the melting point +30°C for 30 minutes. The rate of weight loss from after being held at 50°C for 1 minute to after being held at the melting point +30°C for 30 minutes was calculated.

### <Thermogravimetric (TG) analysis of polyether nitrile-containing carbon fiber composite material>

The rate of weight loss when the polyether nitrile-containing carbon fiber composite material was held at a melting point +30°C for 30 minutes was measured using TGA7 manufactured by PerkinElmer, Inc. The polyether nitrile-containing carbon fiber composite material was held at 50°C for 1 minute under an air stream, then heated to a melting point +30°C at a heating rate of 20°C/min, and held at the melting point +30°C for 30 minutes. Based on the weight of the polyether nitrile contained in the polyether nitrile-containing carbon fiber composite material, the rate of weight loss from after being held at 50°C for 1 minute to after being held at the melting point +30°C for 30 minutes was calculated.

### <Solvent resistance test of polyether nitrile-containing carbon fiber composite material>

The polyether nitrile-containing carbon fiber composite material was cut into 1 cm square and immersed in NMP at 80°C. After the liquid temperature was maintained at 80°C for 20 minutes, the state of the polyether nitrile-containing carbon fiber composite material after the treatment was visually confirmed and evaluated according to the following criteria.

A: No change in shape observed.
B: Swelling.
C: Polyether nitrile is dissolved, and carbon fiber is opened.

### <Raw Materials Used in Examples>

· Hydroquinone (FUJIFILM Wako Pure Chemical Corporation)
· Resorcinol (FUJIFILM Wako Pure Chemical Corporation)
· 4,4'-Dihydroxybiphenyl (Tokyo Chemical Industry Co., Ltd.)
· 2,6-Dichlorobenzonitrile (Tokyo Chemical Industry Co., Ltd.)
· Sodium carbonate (KANTO CHEMICAL CO., INC.)
· NMP (FUJIFILM Wako Pure Chemical Corporation)
· Carbon Fiber Bundles (T700S-12K manufactured by Toray Industries, Inc.).
· 4-phenoxyphenol (KANTO CHEMICAL CO., INC.)

### <Evaluation of interfacial shear strength between polyether nitrile and carbon fiber>

The interfacial shear strength evaluation between the polyether nitrile and the carbon fiber was measured using a nanoindenter TI950 manufactured by Hysitron, Inc. Polyether nitrile and a carbon fiber cut into a length of 1 cm were melt-kneaded and then injection-molded as described in Example 9 to obtain an ISO527-2-1A dumbbell test specimen. A thin piece having a thickness of 18 µm was cut out from the dumbbell test specimen to prepare a sample. The interfacial shear strength between polyether nitrile and carbon fiber was measured by extruding one fiber in the sample with a flat tip indenter. The average of five measurements was taken as the measured value.

### <Mechanical Properties>

Using an ISO527-2-1A dumbbell test specimen obtained in the same manner as described above as a sample, the tensile strength was measured according to ISO527-1 using AG-50kNx universal tester manufactured by Shimadzu Corporation. The average of five measurements was taken as the measured value.

### [Example 1]

A 3L separable flask equipped with a stirrer, a nitrogen introducing tube and a Dean-Stark tube was charged with 88.1 g (800 mmol) of hydroquinone, 140.4 g (816 mmol) of 2,6-dichlorobenzonitrile, and 101.8 g (960 mmol) of sodium carbonate, 800 mL of NMP and 30 mL of toluene were added thereto under a nitrogen atmosphere, and the mixture was reacted at 160°C for 2 hours, at 180°C for 2 hours, and then at 200°C for 8 hours. After completion of the reaction, the reaction solution was discharged to a receiving container containing 3 L of a mixed solvent of NMP: water = 8 : 2 (volume ratio) to precipitate polyether nitrile, thereby obtaining particles. The obtained particles were washed 3 times with 3 L of a mixed solvent (room temperature) of NMP: water = 8 : 2 (volume ratio) and further 3 times with 3 L of warm water (80°C), and vacuum-dried at 80°C overnight to obtain polyether nitrile particles. The copolymerization ratio of the obtained polyether nitrile particles was [N/(N + M)] = 1.00. The melting point of the obtained polyether nitrile particles was 388°C.

The polyether nitrile particles obtained as described above were quantitatively supplied from a feeder to an impregnation die set at a melting point +30°C (418°C). 16 bobbins each wound with a carbon fiber bundle (T700S-12K) were prepared, and the carbon fiber bundle was continuously fed from each bobbin through a yarn path guide. The 16 carbon fiber bundles fed out were set to have a width of 50 mm, and passed through the impregnation die. In this way, the carbon fiber bundle continuously passing through the impregnation die was impregnated with polyether nitrile. Carbon fiber impregnated with polyether nitrile was continuously withdrawn from the nozzle of the impregnation die at a rate of 1 m per minute using a take-up roll. The withdrawn carbon fiber bundle was cooled with a cooling roll and then wound with a winding machine to obtain a polyether nitrile-containing carbon fiber composite material having a polyether nitrile content of 50 wt%.

The resulting polyether nitrile and polyether nitrile-containing carbon fiber composite material were analyzed by the method described above. The rate of weight loss under air, the melting point, and the solvent resistance were as shown in Table 1.

### [Examples 2 to 8, Comparative Examples 1 to 2]

The same operation as in Example 1 was performed except that the kind and blending amount of the aromatic compound having two hydroxyl groups were changed as shown in Tables 1 and 2. The obtained polyether nitrile-containing carbon fiber composite material was analyzed by the above method. The rate of weight loss under air, the melting point, and the solvent resistance are shown in Tables 1 and 2.

### [Example 9 and Comparative Example 3]

Polyether nitrile particles were obtained by performing the same operation as in Example 1 except that the kind and blending amount of the aromatic compound having two hydroxyl groups were changed as shown in Table 2. The obtained polyether nitrile particles and a carbon fiber (T700S-12K) cut into a length of 1 cm were mixed at a weight ratio of 85 : 15, and the mixture was kneaded at a temperature of melting point +30°C (418°C) using a small kneader (HAKKE MInilLab2 manufactured by Thermo Scientific), and then pelletized. The obtained pellets were dumbbell test specimens conforming to ISO527-2-1A at a melting point +30°C (418°C) using a small molding machine (HAKKE MIniJet pro manufactured by Thermo Scientific). The tensile strength and the interfacial shear strength between the polyether nitrile and the carbon fiber were measured using a dumbbell test specimen of the obtained polyether nitrile-containing carbon fiber composite material having a content of polyether nitrile of 85 wt%. The results are shown in Table 2.

### [Example 10]

The same operation as in Example 1 was performed except that the type and blending amount of the aromatic compound having two hydroxyl groups were changed as shown in Table 2, and 4-phenoxyphenol was blended as the end-capping agent in the blending amount shown in Table 2 at the timing of blending the aromatic compound having two hydroxyl groups. The obtained polyether nitrile-containing carbon fiber composite material was analyzed by the above method. The rate of weight loss under air, melting point and solvent resistance are shown in Table 2.

**[Table 1]**

| | | Example 1 | Example 2 | Example 3 | Example 4 | Example 5 | Example 6 |
|---|---|---|---|---|---|---|---|
| Blend during polyether nitrile polymerization | Blending amount of hydroquinone (mmol) | 800 | 784 | 720 | 680 | 600 | 720 |
| | Blending amount of resorcinol (mmol) | - | 16 | 80 | 120 | 200 | - |
| | Blending amount of 4,4'-dihydroxybiphenyl (mmol) | - | - | - | - | - | 80 |
| | Molar ratio, [N/(N + M)] | 1.00 | 0.98 | 0.90 | 0.85 | 0.75 | 0.90 |
| | Blending amount (mmol) of 4-phenoxyphenol | - | - | - | - | - | - |
| Characterization of polyether nitriles | Rate of weight loss under air in thermogravimetric analysis (%) | 0.2 | 0.3 | 0.6 | 1.2 | 1.8 | 0.2 |
| Characterization of polyether nitrile carbon fiber composite materials | Content of polyether nitrile (wt%) | 50 | 50 | 50 | 50 | 50 | 50 |
| | Melting point (°C) | 388 | 370 | 335 | 322 | ND | 337 |
| | Rate of weight loss under air in thermogravimetric analysis (%) | 0.1 | 0.1 | 0.4 | 0.8 | 1.3 | 0.1 |
| | Solvent resistance | A | A | A | A | B | A |
| | Tensile strength (MPa) | - | - | - | - | - | 310 |
| | Interfacial shear strength of polyether nitrile/carbon fiber (MPa) | - | - | - | - | - | 110 |

**[Table 2]**

| | | Example 7 | Example 8 | Example 9 | Example 10 | Comparative Example 1 | Comparative Example 2 | Comparative Example 3 |
|---|---|---|---|---|---|---|---|---|
| Blend during polyether nitrile polymerization | Blending amount of hydroquinone (mmol) | - | 80 | 760 | 40 | - | 80 | 40 |
| | Blending amount of resorcinol (mmol) | - | - | 40 | 760 | 800 | 720 | 760 |
| | Blending amount of 4,4'-dihydroxybiphenyl (mmol) | 800 | 720 | - | - | - | - | - |
| | Molar ratio, [N/(N + M)] | 1.00 | 0.90 | 0.95 | 0.95 | 1.00 | 0.90 | 0.95 |
| | Blending amount (mmol) of 4-phenoxyphenol | - | - | - | 1.2 | - | - | - |
| Characterization of polyether nitriles | Rate of weight loss under air in thermogravimetric analysis (%) | 0.2 | 0.2 | 0.3 | 3.8 | 7.1 | 6.5 | 6.7 |
| Characterization of polyether nitrile carbon fiber composite materials | Content of polyether nitrile (wt%) | 50 | 50 | 50 | 50 | 50 | 50 | 50 |
| | Melting point (°C) | 372 | 342 | 345 | 315 | 338 | 318 | 330 |
| | Rate of weight loss under air in thermogravimetric analysis (%) | 0.1 | 0.1 | 0.2 | 3.0 | 5.8 | 5.3 | 5.5 |
| | Solvent resistance | A | A | A | A | A | A | A |
| | Tensile strength (MPa) | - | - | 280 | - | - | - | 150 |
| | Interfacial shear strength of polyether nitrile/carbon fiber (MPa) | - | - | 90 | - | - | - | 30 |

Comparison between Examples 1 to 8 and Comparative Examples 1 to 2 shows that when the main monomer is hydroquinone, the polyether nitrile and the polyether nitrile composite material have excellent thermal stability (rate of weight loss under air).

Comparison of Example 1 with Example 2 and comparison of Example 8 with Example 7 show that when [N/(N + M)] < 1.00 is satisfied, the melting point of polyether nitrile can be made lower than that when [N/(N + M)] = 1.00, and the melting point is 370°C or lower.

Comparison of Example 4 with Example 5 shows that when 0.80 ≤ [N/(N + M)] is satisfied, the polyether nitrile composite material has particularly excellent solvent resistance.

Comparison of Example 6 and Example 9 with Comparative Example 3 shows that polyether nitrile composite materials of Example 6 and Example 9 having excellent thermal stability (small rate of weight loss under air) are polyether nitrile composite materials having high interfacial shear strength of polyether nitrile/carbon fiber and high tensile strength.

Comparison of Example 10 with Comparative Example 3 shows that the thermal stability of the polyether nitrile composite material is improved (the rate of weight loss under air is reduced) by performing terminal blocking.

## Claims

1. A polyether nitrile having N repeating units represented by formula (I) and M repeating units represented by formula (II), wherein N and M are integers satisfying a relationship of 0 < [N/(N + M)] ≤ 1.00, and having a rate of weight loss of 5% or less when held in air at (melting point + 30°C) for 30 minutes in thermogravimetric (TG) analysis: 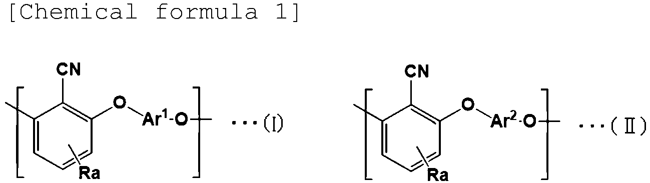 wherein Ar¹ and Ar² have different skeletons each selected from one kind of units represented by the following formulas (a) to (f); R is any organic group selected from a linear organic group having 1 to 6 carbon atoms, a branched organic group having 3 to 6 carbon atoms, and a cyclic organic group having 3 to 6 carbon atoms; R may contain one or more atoms selected from an oxygen atom, a nitrogen atom, and a sulfur atom; a represents the number of substituent R; a in formulas (a), (b), (c), (e), and (f) is any integer of 0 to 4, and a in formulas (I), (II), and (d) is any integer of 0 to 3; and when a plurality of groups R are present, the Rs may be the same as or different from each other; 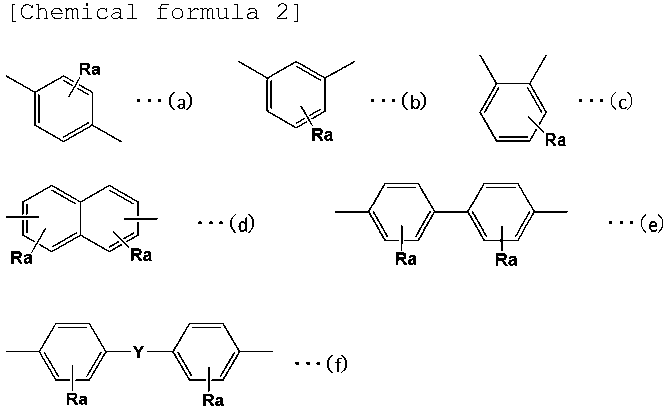 Y in the formula (f) is a group selected from the following units; X is any of a hydrogen atom, a methyl group, and a trifluoromethyl group.

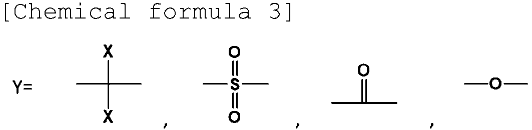

2. A polyether nitrile-containing carbon fiber composite material comprising the polyether nitrile according to claim 1 and carbon fibers, wherein a rate of weight loss is 5% or less when the polyether nitrile-containing carbon fiber composite material is held in air at (melting point of the polyether nitrile + 30°C) for 30 minutes in thermogravimetric (TG) analysis, and a content of the polyether nitrile is 20 to 85 wt%.

3. The polyether nitrile-containing carbon fiber composite material according to claim 2, wherein Ar¹ is a skeleton represented by the formula (a) or the formula (e), and Ar² is one kind of skeleton selected from units represented by the formulas (a) to (f), and is a skeleton different from Ar¹.

4. The polyether nitrile-containing carbon fiber composite material according to claim 2 or 3, wherein N and M are integers that satisfy a relationship of 0.80 ≤ [N/(N + M)] < 1.00.

5. The polyether nitrile-containing carbon fiber composite material according to any one of claim 2 or 3, wherein the polyether nitrile has a melting point of 280 to 370°C.

6. A mobility vehicle component comprising the polyether nitrile-containing carbon fiber composite material according to claim 2 or 3.

7. A structural material component comprising the polyether nitrile-containing carbon fiber composite material according to claim 2 or 3.

8. A mobility vehicle using the mobility vehicle component according to claim 6.

9. A structural material using the structural material component according to claim 7.
